(19) Europäisches Patentamt

European Patent Office

Office européen des brevets

(11) **EP 3 340 378 A1**

(12) **EUROPEAN PATENT APPLICATION**

(43) Date of publication:
**27.06.2018 Bulletin 2018/26**

(21) Application number: **16306791.1**

(22) Date of filing: **22.12.2016**

(51) Int Cl.:
*H01Q 1/32* (2006.01)   *H01Q 3/24* (2006.01)
*H01Q 3/30* (2006.01)   *H01Q 21/06* (2006.01)
*H01Q 21/08* (2006.01)   *H01Q 25/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Centre National d'Etudes Spatiales
75039 Paris Cedex 01 (FR)**

(72) Inventors:
• **CAPET, Nicolas
31000 Toulouse (FR)**
• **MARMET, François-Xavier
31600 Muret (FR)**

(74) Representative: **Bell, Mark et al
Marks & Clerk France
Immeuble «Visium»
22, avenue Aristide Briand
94117 Arcueil Cedex (FR)**

(54) **A SIMPLIFIED GNSS RECEIVER WITH IMPROVED PRECISION IN A PERTURBATED ENVIRONMENT**

(57)    The invention discloses an antenna assembly that may be connected to a standard GNSS receiver. The antenna assembly comprises antenna elements that are configured to shape a radiating pattern which is directional in a direction of movement of the GNSS receiver and which has a FOV above the receiver that may be limited. The signals received in LOS will then have a much better C/N0 than the Non-LOS signals. In some embodiments, the FOV may be twisted leftwards or rightwards depending on a configuration of a vehicle carrying the receiver. In some embodiments, the antenna assembly is capable of operating in a plurality of modes that will differ notably by the FOV of the radiating pattern above the receiver. Switching between modes may be triggered manually or automatically and may be based on a determination of the prevalence and/or type of multipath reflections in the area where the rover moves. This determination may be based on sensor processing or a determination of a coarse position that will give to an index of multipath reflections from a database and/or a map.

FIG.2a

**Description**

FIELD OF THE INVENTION

The invention relates to a GNSS receiver. More specifically the radiation pattern of the antenna may be shaped to provide a higher proportion of Line Of Sight (LOS) signals to a standard GNSS receiver which will then be better protected against non-LOS signals that could degrade the overall precision of the navigation system.

BACKGROUND

The use of navigation receivers becomes increasingly pervasive in everyday life. It is all the more common that cars' on-board electronics, smart phones, tablets include navigation receivers, and that applications running thereon capture, as input information, position and trajectory of the user of the terminal.

Navigation receivers rely on L-Band RF (radio frequency) signals transmitted by Medium Earth Orbiting satellites, which are generally included in constellations comprising tens of them to cover most of the surface of the earth, such as the GPS™ (US), Galileo™ (Europe), Glonass™ (Russia) and Beidou™ (China). These constellations are designated under the generic acronym of GNSS (Global Navigation Satellite System).

GNSS carrier signals are modulated by a pseudo-random code and a navigation message which allow calculation of a pseudo-range between the receiver and a definite satellite. With a minimum of four pseudo-ranges, it is possible to calculate Position, Velocity and Time (PVT) of the receiver. In receivers of the type used by consumers, the position information is the one which is directly used to compute the navigation solution.

PVT measurements are affected by a number of errors, some of which are intrinsic to the principle of measurement used (i.e, due to the deviation in trajectory of the RF signals through the atmosphere - ionosphere and troposphere - due to variations in the orbits of the satellites), intrinsic to the receiver and satellites imperfections (clock biases for instance), or intrinsic to some configurations of the satellites in view at a moment in time (i.e. elevation of the satellites over the horizon; low dispersion of visible satellites - high DOP, acronym for Dilution Of Precision ). A number of corrections can be used to mitigate these errors, either with the use of specific processing techniques which are only available to certain types of receivers (e.g. dual-frequency receivers can mitigate ionospheric errors up to a gain of precision from a few tens of meters to a few meters or better, depending on the quality of the corrections, the quality of the receiver and the quality of the receiver's antenna). Precise Point Positioning or PPP can reach better precision thanks to the use of multiple additional error corrections, including receiver and satellite biases. Differential GPS (DGPS) or Real Time Kinematics (RTK) provide a precision of a few tens of centimetres thanks to an integration of outside information (relative positioning vis-à-vis a number of fixed reference stations with known positions).

It is more difficult to mitigate in a consistent and efficient manner some errors which depend on the position of the receiver, notably when this position is may have an object or objects nearby which reflect the navigation RF signals and/or mask a number of the satellites which should be in line of sight (LOS) at a moment in time. In such conditions, the precision of the calculation of the PVT may be quite poor, all other causes of errors being equal, both at the time of acquiring a GNSS signal and at the time of tracking said signal.

In urban canyons (i.e. streets in between skyscrapers), surrounding obstacles will not only increase the error in the determination of the pseudo-range of a satellite because of multipath (User Equivalent Range Error or UERE), but also the (Geometric) Dilution Of Precision, (GDOP or DOP), because the field of view of the antenna will be narrower, thus limiting the increase in precision which would otherwise be possible due to the use of additional satellites.

The degradation in UERE is due to the signal impairments of the definite satellite which is acquired or tracked by a tracking loop. Tracking of a satellite relies on a maximization of a correlation function between the acquired code signal and a number of local replicas generated by the receiver of the code signals which are specific to each satellite. The correlation functions will be corrupted by multipath and the satellite signal may be not correctly acquired or may be lost. Even if signal tracking is still achievable, signal impairments will affect the correlation function's shape, thus degrading the pseudo-range estimation, and the UERE.

Most of the mitigation techniques therefore rely on specific processing applied at the correlation stage. For a general overview of these prior art techniques which can be applied, see for instance Bhuiyan et alii, "Advanced Multipath Mitigation Techniques for Satellite-Based Positioning Applications", International Journal of Navigation and Observation, Volume 2010, Article ID 412393. Among these techniques are: using narrow correlators (i.e. correlators spaced by much less than a chip); using numerous correlators per tracking channel instead of a standard number of three and performing a double delta calculation or applying signal quality monitoring (SQM) techniques; Multipath Estimation Delay Lock Loop (MEDLL), which uses the output of the correlation functions to estimate a full navigation signal of a definite satellite comprising a sum of LOS and non LOS signals.

All these solutions are complex and costly to implement either at the hardware level or at the software level or both. In any case, they are difficult to use in consumer receivers of the type used in a smart phone or a car navigation system.

Other attempts at mitigating multipath have been tried, for instance solutions of the type described by Neuenschwander, "Satellite Tracking from Camera: The Inverse GPS Problem", Swiss Federal Institute of Technology, Zurich, 2009. In approaches of this kind, images of the environment of the receiver are acquired; the images are converted into Earth Centered Earth Fixed coordinates using the output of an Inertial Navigation System (INS) which is fixed in relation to the GNSS receiver, and the satellites in LOS are deducted from a comparison between the output of the image processing and the satellites ephemerides which give positions of the satellites of a constellation as a function of time at a position.

Such solutions are quite complex to implement because they require an INS platform and external data and they necessitate significant processing power.

It is therefore important to find a solution to mitigate the effects of multipath which could be implemented in a classical receiver available to the general public.

A new solution has been proposed by the inventors of the instant application in European patent application n° 16305611.2. This solution consists in using an antenna assembly the radiation pattern of which may be reconfigured based on a determination of the LOS field of view above the receiver which is determined by a sensor.

In some applications it is still desirable to provide a simpler solution.

The present invention discloses a solution to overcome the previously cited drawbacks.

SUMMARY OF THE INVENTION

A purpose of the present invention is to meet the need of a simpler, compact and cost effective solution. To this effect, the invention discloses notably an antenna assembly the radiation pattern of which is shaped so as to attenuate multipath reflections.

To this effect, this invention discloses an antenna assembly configured to receive GNSS signals at a rover having a frame of reference (x, y, z), said receive being in at least a first mode with a sectoral radiating pattern having a main lobe having a narrow aperture in a (x, z) plane and a wide aperture in a (y, z) plane.

Advantageously, the sectoral radiating pattern is depointed in the (x, z) plane.

Advantageously, the antenna assembly of the invention comprises N antenna elements of an identical form factor, N being higher than one, the N antenna elements being aligned in direction (x) and being spaced of an even distance d.

Advantageously, the N antenna elements are one of patch antenna elements laid out in the (x, y) plane, or monopoles, dipoles or helical elements erected in the (x, z) plane.

Advantageously, the antenna assembly of the invention further comprises a feeding circuit configured to feed GNSS signals received at all or part of the N antenna elements to an RF Front-End of the GNSS receiver.

Advantageously, the feeding circuit comprises one or more combiners/dividers configured to combine GNSS signals received from two or more antenna elements into a single GNSS signal.

Advantageously, the feeding circuit comprises one or more phase shifters configured to impart a predefined phase shift that varies linearly from a first antenna element to a next one in the line.

Advantageously, the feeding circuit comprises one or more switches configured to activate/deactivate one or more of the N antenna elements.

Advantageously, the feeding circuit comprises at least one Analog to Digital Converters and a beam-forming circuit.

Advantageously, the antenna assembly of the invention further comprises a control logic configured to generate control commands to be sent to the feeding circuit, to modify one or more of the aperture of the sectoral radiating pattern in the (x, z) plane and its depointing.

Advantageously, the antenna assembly of the invention is configured to operate in at least a second mode having a radiating pattern that is different from the radiating pattern of the first mode.

The invention also discloses a method of designing an antenna assembly fit to receive GNSS signals at a rover having a frame of reference (x, y, z), said receive being in at least a first mode with a sectoral radiating pattern having a main lobe, the main lobe having a narrow aperture in a (x, z) plane and a wide aperture in a (y, z) plane.

Advantageously, the method of the invention comprises: defining one or more values of a desired aperture of the main lobe of the sectoral radiating pattern in the (x, z) plane; defining one or more values of a desired depointing in the (x, z) plane; defining one or more numbers N of antenna elements of a given form factor to be aligned in an x direction with an even spacing d; defining a one or more values of a phase shift $\varphi$ to be applied linearly to all or part of the N antenna elements; wherein number N, spacing d and phase shift are selected as a function of the one or more values of the desired aperture and the one or more values of the desired depointing.

The invention also discloses a GNSS receiver configured to be positioned in a rover having a frame of reference (x, y, z), the GNSS receiver comprising a connection to an antenna assembly configured to receive GNSS signals, said receive being in at least a first mode with a sectoral radiating pattern having a main lobe having a narrow aperture in a (x, z) plane and a wide aperture in a (y, z) plane.

Advantageously, the GNSS receiver of the invention further comprises a processing logic to generate commands to be sent to the antenna assembly to switch from the first receive mode to a second receive mode.

Advantageously, the commands generated to be sent to the antenna assembly comprise one or more of an angle of aperture of the main lobe of the sectoral radiating pattern and an angle of depointing in the (x, z) plane.

In some of its embodiments, the antenna assembly is configured to operate in a plurality of different modes, each mode adapted to different areas, each area with different levels of multipath reflections.

In some of its embodiments, the invention can be implemented on a classical, unmodified GNSS receiver, using a simple directional antenna.

In some other embodiments, it can be implemented on GNSS receivers having a map matching capability. In some embodiments, software only modifications to the receivers have to be implemented to reconfigure the radiating pattern of the antenna assembly based on the density of multipath reflections around the receiver.

A large variety of antenna assembly configurations may be designed to implement the invention, some of which are described in this specification.

In addition, the invention may be implemented via a low Size, Weight and Power device.

BRIEF DESCRIPTION OF THE DRAWINGS

The invention and its advantages will be better understood upon reading the following detailed description of a particular embodiment, given purely by way of non-limiting example, this description being made with reference to the accompanying drawings in which:

- Figure 1 illustrates the problem of LOS/non-LOS communication in the prior art which is addressed by the invention;
- Figures 2a and 2b represent some examples of desired radiating patterns of a GNSS antenna on-board a vehicle according to some embodiments of the invention;
- Figures 2c, 2d, 2e and 2f represent some examples of typical radiating patterns some of which may be used according to some embodiments of the invention;
- Figure 3 represents an architecture of an antenna assembly of a GNSS receiver according to some embodiments of the invention;
- Figures 4a to 4h represent antenna elements and their feeding circuits in a plurality of embodiments of the invention;
- Figures 5a to 5c illustrate some design rules to be applied to select an antenna assembly configuration according to some embodiments of the invention;
- Figure 6 represents a schematized view of a packaging of an antenna arrangement in some embodiments of the invention;
- Figure 7 represents an architecture of an antenna arrangement in some embodiments of the invention;
- Figure 8 displays a functional architecture of a system to implement the method of the invention according to some of its embodiments.

DETAILED DESCRIPTION

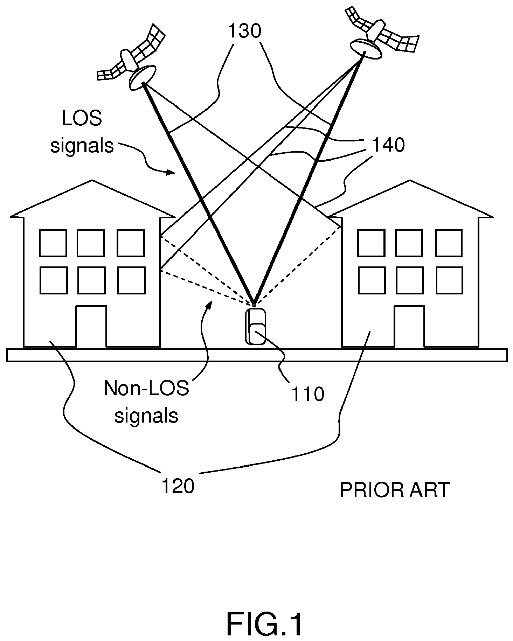

Figures 1a and 1b illustrate the problem of LOS/non-LOS communication in the prior art which is addressed by the invention.

On figure 1a, a receiver 110a is positioned between two buildings 120a. Some signals 130a reach the receiver in a direct line. Some other signals 140a reach the receiver after having been reflected on the buildings. A classical receiver is not able to differentiate direct signals 130a from reflected signals 140a, thereby leading to a positioning error. Multipath errors at a given location of the receiver 110a may depend on the characteristics of the obstacles at the location (height, roughness of their surface, etc...) but also on the elevation of the satellites in view, and therefore on the time of the day, and on the meteorological conditions.

It is quite difficult to correct multipath errors, notably because they are location and time dependent and therefore require significant memory and/or processing power. Also, receivers which are configured or aided to cope with other types of errors, notably ionospheric errors, like dual-frequency receivers, are not necessarily efficient in a multipath environment, notably when a cold start of the receiver is needed.

It has thus always been difficult to find a solution to this problem, as to other types of impairments, which impact the error budget of a navigation solution. And even more so in a simple way which can be applied with classical GNSS receivers.

The solution of the invention is to shape the radiating pattern of the antenna arrangement in a manner which is adapted to the multipath environment. Also, it is possible to configure a GNSS receiver to operate in a plurality of modes, each one of them being adapted to a particular class of multipath reflections. Procuring a configurable radiation pattern of the GNSS antenna arrangement is a solution to this problem.

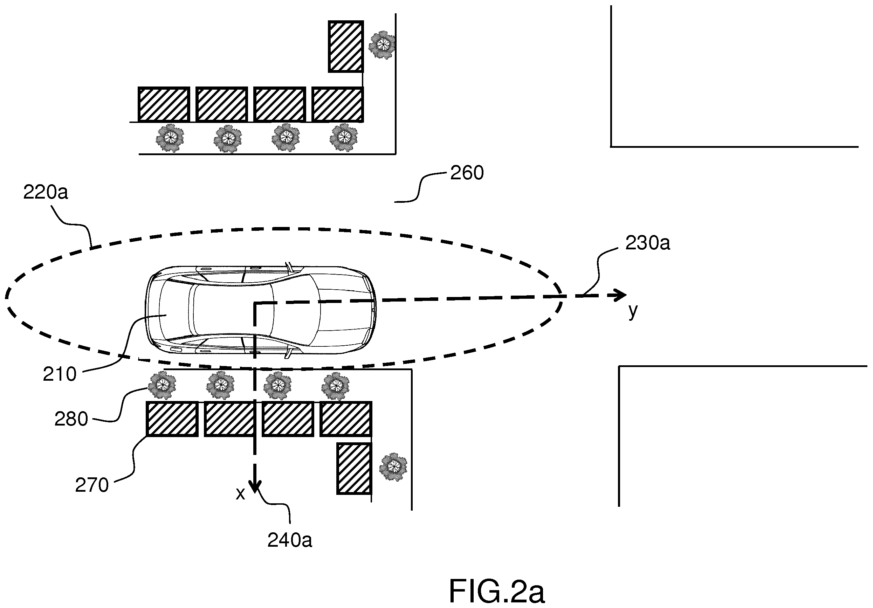

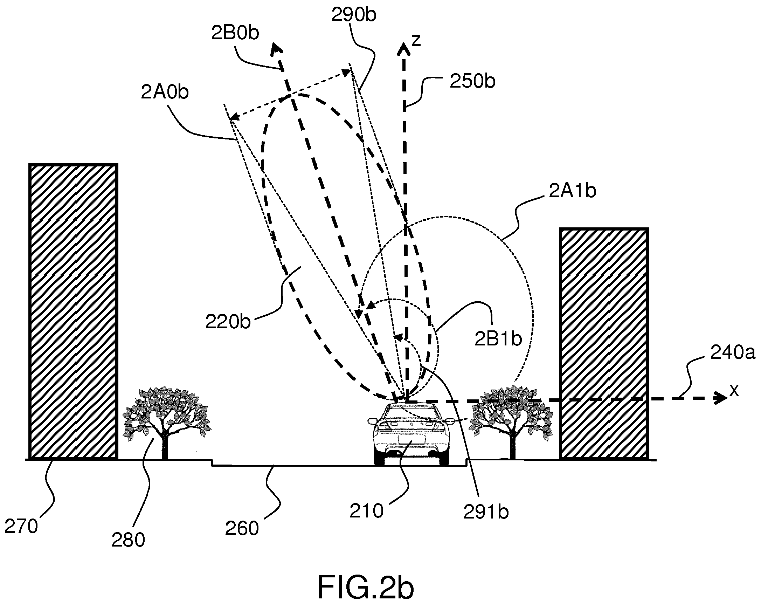

Figures 2a and 2b represent some examples of desired radiating patterns of a GNSS antenna on-board a vehicle according to some embodiments of the invention.

Multipath reflections are notably penalizing in urban canyons. Generally speaking, urban canyons often refer to streets or roads of a width of a few meters to a few tens of meters to the side of which are located buildings with their front face aligned on the main direction of the street/road. The height of the buildings may vary from few meters to a couple of hundred of meters. The front face of the buildings will be more or less continuous, depending on the number of crossing streets/roads and the density of the area.

Outside urban areas, canyoning effect of buildings may come from trees, advertising panels, signaling symbols, or other elements that may reflect or affect GNSS signal propagation.

According to the invention, it is therefore advantageous to be able to use a configured radiating pattern of the antenna arrangement of the GNSS receiver to conform to the shape of a urban canyon, when the receiver navigates in a canyon environment.

Figure 2a illustrates a first longitudinal shape of the radiating pattern which is specifically interesting in an urban canyon. The figure illustrates a vehicle (or rover, the two terminologies being equivalent in this description) 210 travelling on the right side of a street 260 that carries a GNSS receiver. The antenna arrangement is configured in a manner whereby the radiating lobe 220 of the antenna arrangement is shaped to have a larger gain in the direction of movement of the vehicle 230a (direction y in the frame of reference of the vehicle). With such a shape, the LOS signals, which come from above the receiver, will reach the antenna arrangement with a larger gain than the Non-LOS signals reflected by the front faces of the buildings 270 situated alongside the street/road. Reflections on obstacles located along the buildings, such as trees or light poles 280, will also be attenuated, when they reach the antenna arrangement.

In a variant of the invention, the lobe 220b is twisted left towards the middle of the street/road, so as to better attenuate the reflections on the front faces of the streets/roads or obstacles situated along the streets/roads.

Figure 2b displays a cross-section of figure 2a along axis 240a that is the x axis in the frame of reference of the vehicle. It displays a back face view of the vehicle 210 of figure 2a where it is apparent that the lobe 220b is twisted to the left. The assumption is that the vehicle travels on the right side of the street. A symmetrical twist to the right is possible, without departing from the scope of the invention, in case the vehicle travels on the left side of the street.

It is indeed advantageous to shape the right limit 290b of the radiation pattern (angle 291 b with the x axis 240a of the frame of reference of the vehicle) so as to confine said radiation pattern in the canyon, avoiding the front face of the buildings. A value of 90° is adequate for this purpose, the right limit 290b of the vertical cross-section of the radiating pattern of the antenna being then collinear with axis 250b that is the z axis of the frame of reference of the vehicle. It may also be advantageous to shape the left limit 29Ab of the radiation pattern (angle 2A1b with the axis 240a), so as to possibly avoid the reflections of multipath signals on the front faces of the buildings 270 located on the other side of the street/road. Of course, right and left are inverted in case the GNSS receiver moves on the other side of the street/road (in the same direction of travel of the vehicle). Right limit and left limit may be calculated in a number of ways, for instance by propagating the aperture of the main lobe of the radiating pattern to the area where the antenna gain becomes minimal and then connecting these points to the centre of the frame of reference. Other ways, not illustrated on the figure are also possible. Advantageously, the axis 2B0b of the main lobe may be depointed in the (x, z) plane by an angle 2B1 b.

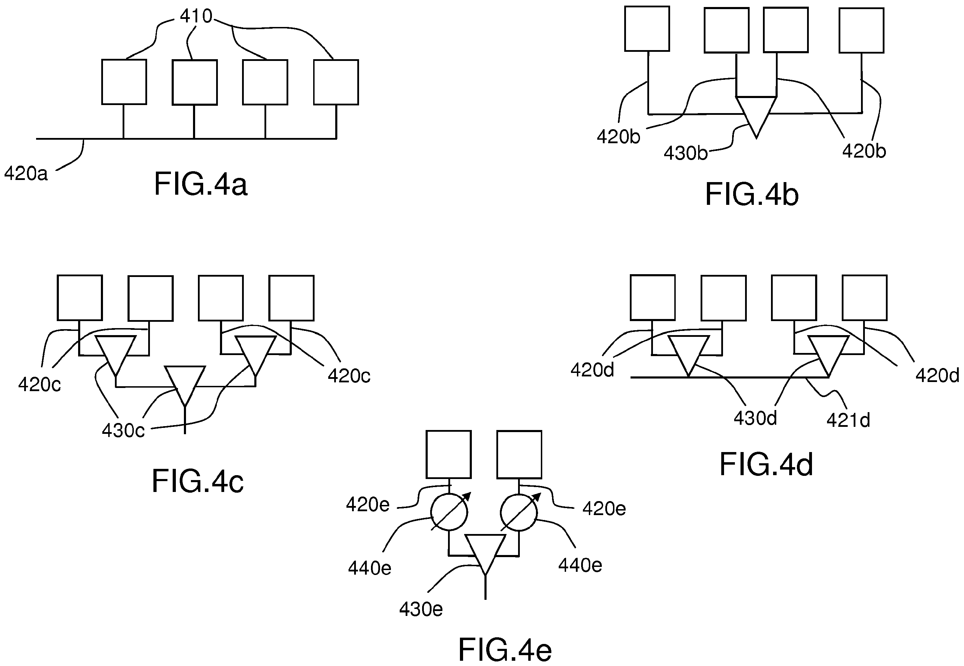

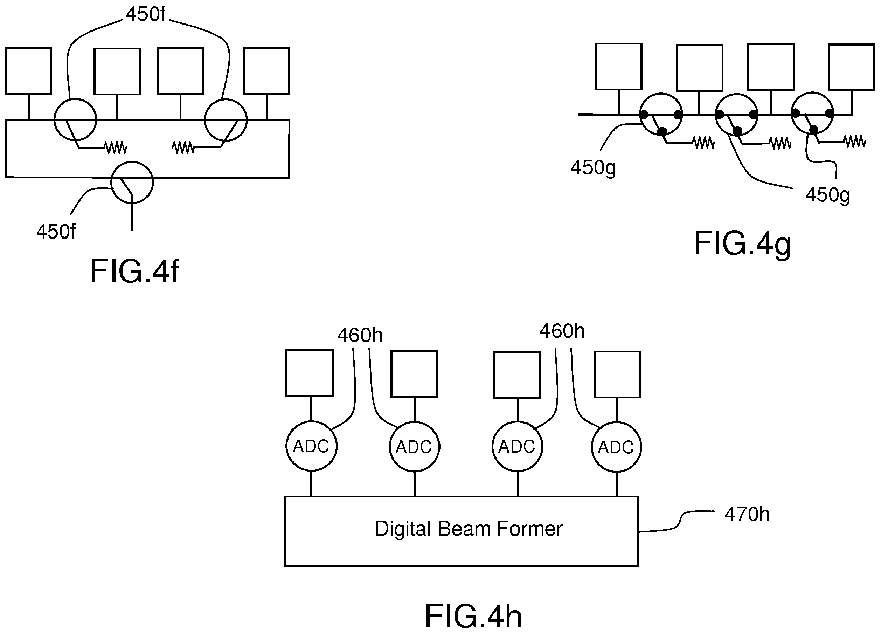

In some embodiments, angles 291 b and 2A1b may be configurable and may be used to control the field of view (FOV) of the antenna arrangement above the GNSS receiver, as explained further below in relation to the description of figure 4.

Similar arrangements are possible for GNSS receivers that are carried by cyclists or motorcyclists. In this case, the antenna (and possibly the receiver) may be attached to a frame of the bicycle or motorcycle, or to a helmet of the cyclist/motorcyclist. Advantageously, the antenna may be conformed to the helmet or frame.

The antenna elements of the antenna arrangement are shaped to receive GNSS signals in the L-Band (i.e. around 1,5 GHz for the current services available to the general public). Other bands, like the S-band, may be used by some constellations now or in the future. The antenna arrangements of the invention may easily be adapted to such changes. In variants of the invention, the antenna arrangement may be configured to switch from a first mode where the radiating lobes are shaped in one of the variants illustrated on figures 2a or 2b, to one or more other modes.

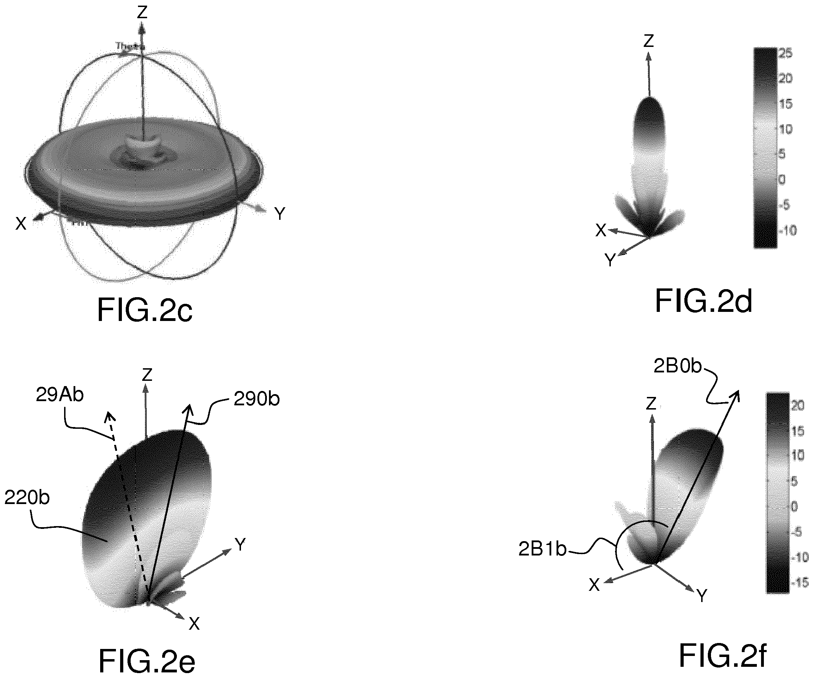

Figures 2c, 2d, 2e and 2f represent some examples of typical radiating patterns, some of which may be used according to some embodiments of the invention.

Figure 2c illustrates a typical radiating pattern of an omnidirectional antenna, such as a monopole or dipole antenna that may be commonly used to receive GNSS signals. Such an antenna will then receive all kind of signals, including LOS and Non-LOS.

Figure 2d illustrates a typical radiating pattern of a directive antenna. With an antenna of this type, it will be difficult to receive signals from more than one satellite at the same time. To be able to acquire signals from a minimum of four satellites, it is required to be able to compute a standard PVT, consequently four antennas are needed (only three if we forget about altitude). Those antennas will need to be steerable, to be able to acquire and track the satellites at different positions and times of the day. While this makes this solution more costly, it may still be advantageous to provide good rejection properties of interfering or jamming signals, which makes such configuration quite interesting for military, government or professional applications but maybe less adapted to commercial or consumer applications.

Figure 2e illustrates a typical radiating pattern of a sectoral antenna. There, the main radiating lobe is similar to the one represented as 220b of figure 2b, except that it is not depointed. The main lobe has been conformed with a maximum gain in the (y, z) vertical plane. It has only a small extension on both sides of a plane of symmetry that is located in the vertical plane. The gain of the antenna is quite low outside of these extensions. This property makes this type of antennas suitable to a certain extent to implement the invention.

Figure 2f illustrates a typical radiating pattern of a depointed antenna. There, the main radiating lobe 220b has an axis of symmetry 2B0b that has an angle 2B1 to axis x that is higher than 90°, like on figure 2b. This property also makes this type of antennas suitable to a certain extent to implement the invention,

According to the invention, it is therefore advantageous to use an antenna arrangement of a sectoral type, the main lobe of which may have an adjustable aperture (290e, 29Ae) in the (x, z) plane, whose axis of symmetry may be depointed to an axis 2B0b. The radiating pattern is then a combination of the ones of figures 2e and 2f. The design and control of such antenna arrangements are commented upon further down in the description.

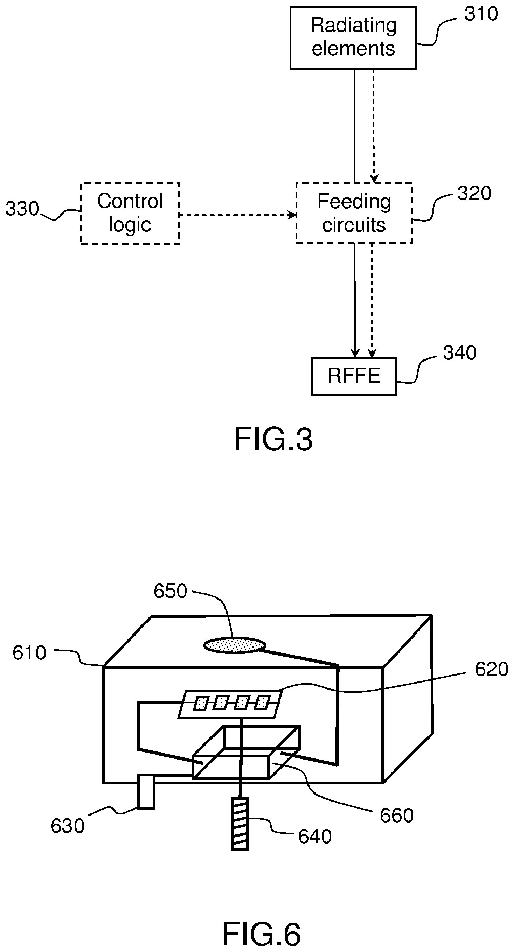

Figure 3 represents an architecture of an antenna assembly of a GNSS receiver according to other embodiments of the invention.

An antenna assembly according to some embodiments comprises:

- radiating elements, 310;
- an optional feeding circuit, 320;
- optionally, a control logic, 330.

The radiating elements 310 or the optional feeding circuit 320, optionally commanded by the control logic 330 feed the received GNSS receiver to the RF Front-End (RFFE) of the GNSS receiver.

In another embodiment, the radiating elements 330 may be patch elements having an identical form factor that are metallic geometries deposited on a PCB support. Each radiating element may advantageously be of a square form factor, although some other form factors (circular or triangular or polygonal or fractal) may be envisaged. Alternatively, the radiating elements may be monopole or dipole linear or helical radiating elements, arranged perpendicularly to a support of the radiating elements. In general, the radiating elements will be aligned in a direction perpendicular to the direction of motion of the vehicle on which they will be mounted (axis y, 230a) of the frame of reference of the vehicle. The radiating elements form a network that generates a radiating pattern defined by the geometry of the elements, their relative positioning, their orientation, the type of feeding circuit to form the pattern, and the configuration of the optional control logic to command the feeding circuit. How to define the number of radiating elements and their spacing will be discussed further down in the description.

The optional feeding circuit 320 may be analog or digital. It may be a simple metallic feed line that feeds the analog signals received at the antenna elements directly to the RFFE. It may be an analog combiner that feeds the received signals to the RFFE. It may comprise a plurality of combiners arranged to feed part of the signals serially and part of the signals in parallel to the RFFE. It may comprise one or more analog dephasing circuits. It may comprise a combination of one or more switches and adapted loads to perform antenna matching. It may comprise Analog to Digital Converters (ADC) at the output of some or all of the antenna elements and a digital beam forming logic. These exemplary multiple configurations of the feeding circuit are therefore possible, without departing from the scope of the invention.

The optional control logic 330 may be an analog or a digital processor configured to generate the desired radiating pattern by sending control commands to the feeding circuits, as will be explained further down in the description.

Figures 4a to 4h represent antenna elements and their feeding circuits in a plurality of embodiments of the invention.

In all figures, the antenna elements are metallic patch elements deposited on a PCB. A number of four elements is generally illustrated on the figures, while a lower number (figure 4e) or a higher number (not illustrated) may be contemplated. Other form factors and technologies may also be contemplated without departing from the scope of the invention.

Figure 4a represents four radiating elements 410 with a simple feed line 420a that directly feeds serially the captured signals to the RFFE of the GNSS receiver, without any intermediate feeding circuit. The GNSS signals thus combine in the RFFE as received by each antenna element.

Figure 4b represents a feed line 420b with a 4 to 1 combiner 430b, that combines serially (e.g. sums) the four GNSS signals received at the four radiating elements into a single signal fed to the RFFE. This arrangement offers a larger bandwidth than an arrangement of the type of figure 4a. This is notably advantageous in the case of multi-frequency receivers, but this configuration will have a larger footprint in the antenna assembly.

Figure 4c represents a plurality of parallel feed lines 420c with three 2 to 1 combiners 430c that combine the four GNSS signals in parallel to feed them to the RFFE. This arrangement also offers a gain in bandwidth, in this case at the expense of both a larger footprint and some additional losses, in comparison to the arrangement of figure 4a.

Figure 4d represents a plurality of parallel feed lines 420d with two 2 to 1 combiners 430d that combine the four GNSS signals in parallel and feed them to a serial line 421 d that itself feeds the combined signals to the RFFE. This configuration may be a good compromise between those of figures 4a, 4b and 4c, offering a wider bandwidth than the one of figure 4a and lower footprint than those of figures 4b and 4c and lower losses than the one of figure 4c.

Figure 4e represents two antenna elements 410, with parallel feed lines 420e, a 2 to 1 combiner 430e and two phase shifters 440e at the output of each antenna elements. The phase shifters are configured to shift the phases of the received signals before their combination.

Figures 4f and 4g represent different configurations of feeding circuits comprising a number of switching circuits having or not an adapted load, the switches allowing to activate/deactivate part of the antenna elements.

Figure 4h represents an antenna assembly comprising ADCs 460g at the output of each antenna element 410, said ADC feeding their output to a beam former 470g. The beam former advantageously allows a more precise configuration of the radiating pattern than the other arrangements where the variations of the radiating patterns is confined to a number of discrete options, at the expense of a higher implementation cost, due in particular to the addition of one or more Low Noise Amplifiers (LNA) and filters at the output of each antenna element and, possibly, of a down converter at the output of the LNAs, depending on the sampling frequency of the ADCs.

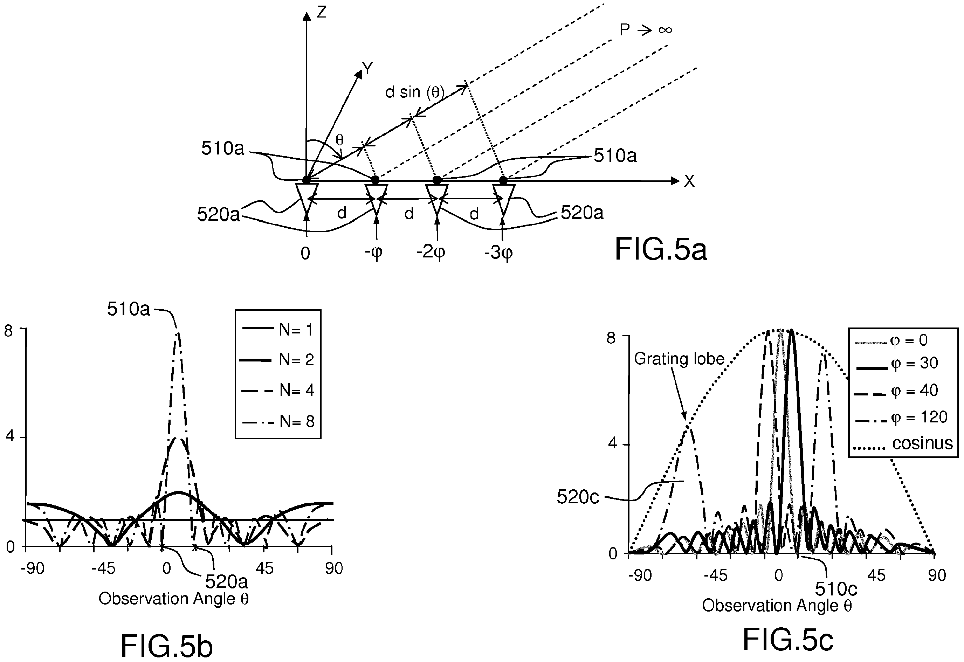

Selection of one of the embodiments illustrated by figures 4a to 4h, or of a variant thereof, is discussed in relation with figures 5a to 5c below. These embodiments are illustrative only of the design options available to configure a desired radiating pattern according to the invention. Many others may be contemplated without departing from the scope of the invention. Also, some of these embodiments may be combined. For instance, different radiating elements may be activated in different reception conditions, the activation/deactivation being commanded by one or more switches as illustrated on figures 4f and 4g. The radiating elements that are active at a moment in time, based on the position of the switch, may include phase shifter that will generate linear phase shifts. Also, a beam-forming circuit may consolidate both kinds of controls (activation/deactivation of a number of radiating elements, generation of a linear phase shift applied to the active radiating elements).

Figures 5a to 5c illustrate some design rules that may be applied to select an antenna assembly configuration according to some embodiments of the invention.

In the embodiments that include phase shifters, such as those of the type depicted on figure 4h, it is possible to calculate the main parameters of the network of antenna elements by applying formulas known from the array theory, commented upon below in relation to figures 5a to 5c.

Figure 5a is a schematics that illustrates N identical radiating sources 510a positioned along axis x at even distance d from one another. In the example illustrated on the figure, N=4. Uncoupled feeds are assumed. Phase shifters 520a generate a linear phase gradient (from $-\varphi$ at the second feed up to $-3\varphi$ at the fourth feed). If P is a point located at a distance r from the radiating sources (with a far field assumption, r being much larger than d), the electric field at P, $\vec{E}(P)$ is given by the following formula:

$$\vec{E}(P) = E(\theta)\frac{e^{-jkr}}{r}\vec{e}_p \tag{1}$$

where $E(\theta)$ is the sum of the electric field received by the elementary radiating pattern generated by an individual element, k is the wave number at the frequency of operation and $\vec{e}_p$ is the field orientation at a given instant.

The norm of $E(\theta)$ is in turn given by the following formula:

$$\left|E(\theta)\right| = N \times \left|F(\theta)\right| \times AF \tag{2}$$

AF is the Array Factor and depends only on the geometry of the array (N, d) and of the phase shift $\varphi$.

$$AF = \left|\frac{\sin N(\frac{\pi}{\lambda}d\sin\theta - \frac{\varphi}{2})}{N\sin(\frac{\pi}{\lambda}d\sin\theta - \frac{\varphi}{2})}\right| \tag{3}$$

As shown on figure 5b, the maximum amplitude of the field 510b ($D_{max}$) increases with the number of feeds N while its aperture 520b ($\theta 3_{dB}$) decreases.

Also, as shown on figure 5c, the pointing direction (or direction of the main lobe) 510c varies with the dephasing. Under certain conditions, grating lobes 520c, i.e. side lobes with an amplitude close to the amplitude of the main lobe, may appear. To avoid these grating lobes, the distance d between the radiating elements should a value that is lower than a maximum, according to the following formula:

$$\frac{d}{\lambda} < \frac{1}{1 + \left| \sin \vartheta_m \right|} \tag{4}$$

where $\vartheta_m$ is the maximum desired angle of depointing.

Applying these design rules then allows an antenna artisan to configure an antenna arrangement to fit the specification of the radiation pattern to be obtained to implement the invention, according to some of its embodiments.

Advantageously, an antenna arrangement according to the invention may have between 2 to 8 patch elements, with a total width of the arrangement of about λ (where λ is a wavelength for L-band signals which are the most common) and a distance between elements of λ/8, λ/4 λ/2, or λ. Switches may command a determined number n out of the N elements to be active at the same time and fed serially or in parallel. The higher n is, the thinner the aperture of the sectoral radiating pattern. With a low number n of elements (1 or 2, preferably situated in the middle of the array) that are activated (i.e. connected to the feed line through the switch) the radiating pattern will have an open FOV in the (x, z) plane and come close to the pattern of an omnidirectionnal antenna. Conversely, with a high number n of elements (6 to 8, for instance), the radiating pattern will have a low aperture with a narrow FOV in the (x, z) plane, coming close to the configuration of a "perfect" sectoral antenna, whose radiating energy is concentrated in a narrow sector in the (y, z) plane. In addition, phase shifters may impart a depointing to the radiating pattern, the angle of depointing being determined by the amount of phase shift applied linearly from one antenna element to the next in line that is activated.

Figure 6 represents a schematized view of a packaging of an antenna arrangement related to some embodiments of the invention.

A specific packaging is in no way mandatory to implement the invention. The description of figures 4a through 4h and 5a through 5c will allow a person of ordinary skill to design and implement the invention according to the teachings disclosed in this specification. In particular, when it is only contemplated that a GNSS receiver operate in a same urban environment, it may not be necessary to add features with the capability to switch from an environment affected by multipath reflections to full LOS environment. For example, cars available for on-the spot renting in a number of cities will generally fall in this type of use cases ; Likewise, for buses used for public transportation in cities and for some classes of utility vehicles. Accordingly, the antenna elements may in such use cases be housed in a standard package and connected to the GNSS receiver by a standard connection, without any need for a specific feed circuit, as illustrated for instance on figure 4a, the specific shape of the antenna arrangement radiating pattern being obtained thanks to the physical constitution and relative positioning of the antenna elements. Thus, no other specific figure represents these antenna arrangements beyond the one of figure 4a, that indeed may encompass a number of variants (e.g. number of elements, form factor of the antenna elements, etc.).

In other use cases, it may be advantageous to be able to switch the operating mode of the antenna arrangement from a first mode, adapted to an environment affected by multipath reflections to a second mode that is adapted to an environment where reception of all satellites in view is LOS only, or where Non-LOS signals are very limited. In still other use cases, more than two modes may be provisioned. For instance, three operating modes of the antenna arrangement may be provisioned, a first mode adapted for areas with a very limited field of view (FOV) of LOS reception, a second mode adapted for areas with a broader FOV of LOS reception and a third mode adapted for areas with a full FOV of LOS reception. The different modes may be determined by the angles of the left and right limits of the main radiating lobe of the antenna arrangement, as illustrated by references 29Ab and 290b of figure 2b. For instance in a first mode, angle 291 b may be set at 105° and angle 29Bb at 135°. Such values define a narrow aperture or FOV of the antenna arrangement in the (x, z) plane, defined in the frame of reference of the rover. In a second mode, angle 291 b may be set at 90° and angle 29Bb may set at a value between 120° and 150°. In this second mode, the aperture or FOV of the antenna arrangement in the (x, z) plane is wider than in the first mode. In a third mode, angle 29Bb may be set at a value between 150° and 180° and angle 290b may be set at a value lower than 90°, possibly at a value of 30°, of between 0° and 150°. In this third mode, the aperture or FOV of the antenna arrangement in the (x, z) plane is wider than in the first and second modes. But the aperture or FOV of the antenna arrangement may be the same in the three modes in the (y, z) plane defined in the frame of reference (x, y, z) of the rover. A narrow aperture will generally have an angle smaller than 90°, preferably smaller than 60°, still preferably smaller than 45°. A wide aperture will generally have an angle larger than 90°, preferably larger than 120°, still preferably larger than 135°.

The third mode may also be a pure omnidirectional radiating mode, without any specific shaping of the radiating pattern of the antenna arrangement. This may be obtained either by switching to an alternative antenna assembly or by switching off most of the antenna elements of the antenna arrangement of the invention, i.e. leaving only activated one or two elements located in the middle of the array. It is to be noted that the determination of angles 291 b and 29Bb results from a combination of the physical characteristics of the antenna arrangement (number or elements N, distance between them, d) and the dephasing $\varphi$ applied (that will impact both the aperture of the main lobe and its depointing).

The number of modes and the angles determining their limits may vary as a function of the use cases. A common generic design of an antenna arrangement fit for implementing the teachings of the invention may be selected (for instance one of the designs depicted on figures4a through 4h). The parameters determining the operating modes may be configured at the time of detailed design or even manufacturing, based on the operating conditions of the GNSS receiver to be used with the antenna arrangement. Statistical data may for instance be used to define an optimum number of modes and the limits of the FOV angles of each mode.

Switching between modes may be user-triggered or automatic. When it is user-triggered, a simple button, voice or touch command may be provisioned to operate the switch. In automatic mode, some processing logic may be provisioned to control the command of the switch. For automatic switching, the trigger may come from a GNSS receiver that computes the position of the user, matches the position on a map and determines the likelihood of a canyoning environment. The trigger may come from multiple type of sensors such as LIDAR, RADAR, IR cameras.

Depending on the configuration of the antenna arrangement, the command control of the switch may be mechanical or electrical, or a combination of both. Electrical control may for instance consist in modifying the circuit of the feed lines of the antenna arrangement by commanding one or more switches to activate/deactivate some antenna elements, to modify the FOV to the radiating pattern. It may also consist in configuring differently a phase shifter arrangement driving the antenna arrangement, as will be commented below in relation to other figures further down in the description.

The antenna arrangement of figure 6 may be used notably when at least two operating modes are envisaged, the notion of operating mode having the meaning explained above. Figure 6 is a stylized view of an assembly that may have several form factors and may be located at different places, in relation to the GNSS receiver. It may comprise a radome 610 to protect the antenna elements 620 from rain or snow.

The antenna elements of the type depicted on figures 4a through 4h (or any kind of other antenna elements that are capable of producing, when combined, the radiating patterns of the types depicted on figures 2a and 2b) are configured to receive GNSS signals, in the L-Band (i.e. around 1,5 GHz for the current services available to the general public or any band where GNSS signals may be transmitted, now or in the future, such as the S-band). They are also arranged so as to be able to generate different radiation patterns, as will be explained further down in the description. For doing so, a number of mechanical actuators, parasitic elements, phase shifters and/or driving circuits, ADC and beam-formers may be located close to the antenna elements.

A plurality of combination of antenna elements, each for operating in one of the modes described above, may be provisioned under the radome.

The radome also advantageously includes a DC input 630, an RF output 640 to transmit the signals to the GNSS receiver. In some embodiments, a data link (not shown on the figures) with the receiver may also be provided.

In some optional embodiments of the invention, the antenna arrangement may also comprise, either under an open portion of the top part of the radome or just above said top part, one or more sensors 650, configured to produce information used for the determination of the operating mode discussed above. The sensors may not be collocated at the antenna arrangement, provided however that their relative position is known.

Such sensors should be able to determine a maximum angle of a FOV above and/or along the antenna arrangement, so as to trigger a switch between different operating modes of the antenna arrangement. It may be a camera with a fish-eye lens and/or a number of CCD/CMOS image sensors with different elevation and azimuth orientations arranged on a hemispheric radome. It may also be sensors sensitive to infrared (IR) light, to be able to operate also at night or a combination of visible light and IR. It may also be a plurality of radar, LIDAR or thermal sensors. These types of sensors may allow to trigger a command of a switch between operating modes based on a differentiation of open sky and occulted sky, based on detection of an obstacle in the FOV of the sensor. Combinations of these sensors may be provisioned, depending on a cost/benefit analysis of the configuration required for the use case.

According to some embodiments of the invention, the antenna arrangement may comprise an Antenna Control Unit (ACU, 660). The ACU comprises computing logic to determine the optimum operating mode in the prevailing environment conditions. This determination may be based on a processing of the output of the sensors 650. It may also be based on a first rough determination of the position of the rover and a use of indexes of an intensity of multipath reflections around this position. The ACU is capable to send commands to switch the antenna arrangement from a mode to another mode, based on the output of the computing logic. The switch between operating modes may be mechanical or electrical.

Thus, the signals received in LOS that are unaffected by multipath reflections are transmitted to the GNSS receiver through the RF output 640 with a higher gain.

In a variant, an input port exists from the GNSS receiver to the processing unit that receives data such as the number of satellites in view. When the number of satellites in view in open sky drops below 4, the processing unit may be configured to change the operating mode to generate a wider FOV to acquire the signals of more satellites, so that the number of satellites which are acquired may be increased to or above 4.

In other embodiments, other data may be transmitted from the GNSS receiver to the processing unit through the input port, notably to adapt the selection of the antenna assembly gain pattern to other factors like, for instance, the UERE of a pseudo-range measurement, or a PVT determination.

In other variants, additional sensors or information may contribute to the position determination. For example, the altitude may be obtained with sufficient precision using classical map matching approach as available in most GNSS receiver commercial units. Therefore, with the altitude information, 3 satellites in view are sufficient. With additional information, the number of satellites in view may be even lower for certain period of time.

In all variants of the invention, a compromise based on the application has to be determined between the improvements to the accuracy of the positioning that data fed to the processing unit provide and the cost in the additional power that has to be provided to the processing unit/ACU.

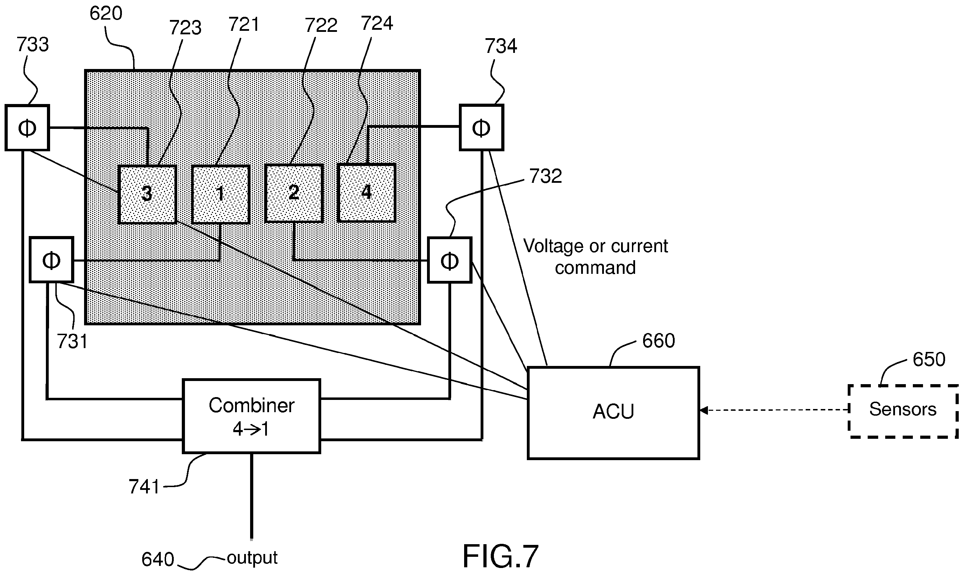

Figure 7 represents an architecture of an antenna arrangement in some embodiments of the invention.

The antenna arrangement of the figure is a specific embodiment of the antenna arrangement of figure 6, where the antenna array 420 comprises 4 radiating elements 721, 722, 723, 724.

The four radiating elements may for example be spiral elements. They may also be helix antennas. They may also be patch antennas, possibly in stacked configuration. The patch antennas may be built in a meta-material, possibly an Artificial Magnetic Conductor (AMC).

The radiating elements may be arranged in a line of radiating elements with a 67mm spacing, which approximately one third of the wavelength for a GPS L1 frequency of 1,575 GHz. The radiating elements may be protected against mutual coupling by providing a specific ground plane structuring.

The 4 radiating elements may be driven by 4 phase shifters 731, 732, 733, 734. The phase shifters may be two-state phase shifters (0°-180°), or phase shifters configured to determine a targeted depointing angle of the radiating pattern together with a specific aperture, as already explained. Phase shifting may be performed by parasitic elements, active lenses or accordable components. The parasitic elements may be Micro Electro Mechanical Systems (MEMS) controlled by an actuator. Generally, the phase shifters receive voltage or current commands from the ACU, 660. The commands are configured to generate the radiation pattern corresponding to the operating mode that is determined to be adequate to the environment of the receiver by the processing logic of the ACU.

Alternatively, the phase shifters may be replaced by a combination of a digital beam-forming circuit and a plurality of ADCs to convert the analog output of each antenna element to digital data and feed this data to the beam-former.

The outputs of the antenna elements are combined in combiner 741, to be sent to the GNSS receiver through output 640.

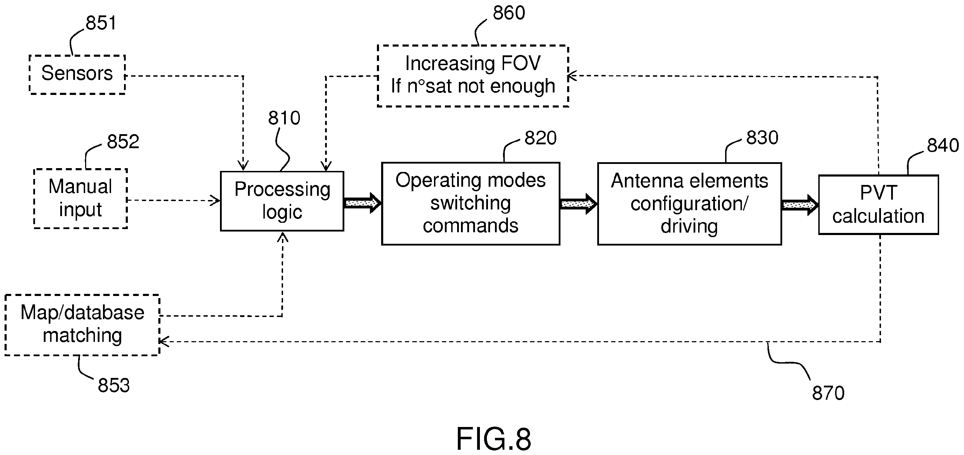

Figure 8 displays a functional architecture to implement the method of the invention according to some of its embodiments.

In some of its embodiments, where the antenna arrangement is configured to operate in a single mode, there may be no need to switch from an operating mode to another operating mode. But there are use cases where this switch may be desirable and possible. The method the steps of which are represented on figure 6 belongs to this second category.

A processing logic 810 is provided to prepare the commands to be sent to the switch between the operating modes 820. In turn, this command module will configurate or drive, mechanically or electrically, the antenna elements to shape a radiating pattern of the desired geometric aspect, in a command logic or actuator 830. The antenna elements may then be able to output the GNSS signals to the GNSS receiver processing channels that may in turn feed data to the PVT calculation unit 840.

The input to the processing logic 810 may be formed alternatively or in combination by a sensors data acquisition unit 851, a manual input unit 852 or a map/database matching unit 853. Only one of these units 851, 852, 853 is required. It can be any of them, based on the use case. All may also be provided in the same device. A return path 860 from the PVT calculation unit (or the GNSS signals processing channels) may be provided to change the operating mode to a wider FOV mode, in case the number of satellites in view is too small (i.e. below 4 or 3, depending on the number of coordinates to be calculated). The PVT calculation unit 840 may return a coarse position to the map/database matching unit 853, through return path 870, so that the map/database matching unit may compute an index of multipath reflection based on the coarse position to be passed to the processing logic 810, to determine the adequate operating mode of the antenna arrangement. In some embodiments, when a PVT cannot be calculated, the coarse position used by the map/database matching unit may be a default value or the last known position, provided that the time elapsed since its calculation is not too large.

The GNSS receiver to which the antenna arrangements or the antenna assembly of the invention is connected may be a standard receiver. It may be embedded in a car navigation system, in a mobile device such as a smart phone or in a specific device, or in an IoT equipment. The antenna arrangement of the invention may be easily substituted to the native antenna of the receiver, provided the channel to feed the signals is available. In a number of embodiments, a return path to feed data available from classical receivers may be provided to the antenna arrangement/assembly.

The examples disclosed in this specification are only illustrative of some embodiments of the invention. They do not in any way limit the scope of said invention which is defined by the appended claims.

**Claims**

1. An antenna assembly (310, 400, 610) configured to receive GNSS signals at a rover having a frame of reference (x, y, z), said receive being in at least a first mode with a sectoral radiating pattern having a main lobe (220b, 220e) having a narrow aperture in a (x, z) plane and a wide aperture in a (y, z) plane.

2. The antenna assembly of claim 1, wherein the sectoral radiating pattern is depointed in the (x, z) plane.

3. The antenna assembly of one of claims 1 to 2, comprising N antenna elements (410) of an identical form factor, N being higher than one, the N antenna elements being aligned in direction (x) and being spaced of an even distance d.

4. The antenna assembly of claim 3, wherein the N antenna elements are one of patch antenna elements laid out in the (x, y) plane, or monopoles, dipoles or helical elements erected in the (x, z) plane.

5. The antenna assembly of one of claims 3 to 4, further comprising a feeding circuit (320) configured to feed GNSS signals received at all or part of the N antenna elements to an RF Front-End (340) of the GNSS receiver.

6. The antenna assembly of claim 5, wherein the feeding circuit comprises one or more combiners/dividers (430b, 430c, 430d, 430e) configured to combine GNSS signals received from two or more antenna elements into a single GNSS signal.

7. The antenna assembly of one of claims 5 to 6, wherein the feeding circuit comprises one or more phase shifters (440e, 731, 732, 733, 734) configured to impart a predefined phase shift that varies linearly from a first antenna element to a next one in the line.

8. The antenna assembly of one of claims 5 to 7, wherein the feeding circuit comprises one or more switches (450f, 450g) configured to activate/deactivate one or more of the N antenna elements.

9. The antenna assembly of one of claims 5 to 8, wherein the feeding circuit comprises at least one Analog to Digital Converters (460h) and a beam-forming circuit (470h)

10. The antenna assembly of one of claims 3 to 9, further comprising a control logic (330) configured to generate control commands to be sent to the feeding circuit, to modify one or more of the aperture of the sectoral radiating pattern in the (x, z) plane and its depointing.

11. The antenna assembly of claim 10, that is configured to operate in at least a second mode having a radiating pattern that is different from the radiating pattern of the first mode.

12. A method of designing an antenna assembly fit to receive GNSS signals at a rover having a frame of reference (x, y, z), said receive being in at least a first mode with a sectoral radiating pattern having a main lobe (220b, 220e), the main lobe having a narrow aperture in a (x, z) plane and a wide aperture in a (y, z) plane.

13. The method of claim 12, comprising:

 - defining one or more values of a desired aperture of the main lobe of the sectoral radiating pattern in the (x, z) plane;
 - defining one or more values of a desired depointing in the (x, z) plane;
 - defining one or more numbers N of antenna elements of a given form factor to be aligned in an x direction with an even spacing d;
 - defining a one or more values of a phase shift φ to be applied linearly to all or part of the N antenna elements;

wherein number N, spacing d and phase shift are selected as a function of the one or more values of the desired aperture and the one or more values of the desired depointing.

14. A GNSS receiver configured to be positioned in a rover having a frame of reference (x, y, z), the GNSS receiver comprising a connection to an antenna assembly (310, 400, 610) configured to receive GNSS signals, said receive being in at least a first mode with a sectoral radiating pattern having a main lobe (220b, 220e) having a narrow aperture in a (x, z) plane and a wide aperture in a (y, z) plane.

15. The GNSS receiver of claim 14, further comprising a processing logic (810) to generate commands to be sent to the antenna assembly to switch from the first receive mode to a second receive mode.

16. The GNSS receiver of one of claims 14 to 15, wherein the commands generated to be sent to the antenna assembly comprise one or more of an angle of aperture of the main lobe of the sectoral radiating pattern and an angle of depointing in the (x, z) plane.

FIG.1

FIG.2a

FIG.2b

FIG.2c

FIG.2d

FIG.2e

FIG.2f

EP 3 340 378 A1

Radiating
elements ⌇ 310

Control
logic 330 ⌇ Feeding
circuits ⌇ 320

RFFE ⌇ 340

# FIG.3

650

610

620

630

640

660

# FIG.6

FIG.4a

FIG.4b

FIG.4c

FIG.4d

FIG.4e

FIG.4g

FIG.4f

FIG.4h

FIG.5a

FIG.5b

FIG.5c

FIG.7

EP 3 340 378 A1

851

Sensors

852

Manual
input

810

Processing
logic

860

Increasing FOV
If n°sat not enough

820

Operating modes
switching
commands

830

Antenna elements
configuration/
driving

840

PVT
calculation

Map/database
matching

853

870

FIG.8

Europäisches
Patentamt

European
Patent Office

Office européen
des brevets

## EUROPEAN SEARCH REPORT

Application Number

EP 16 30 6791

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 056910 A1 (BOSCH GMBH ROBERT [DE]) 28 May 2009 (2009-05-28) | 1-4,6-13 | INV.<br>H01Q1/32 |
| Y | * figures 20,22 *<br>* paragraphs [0001], [0229] - [0232], [0238] * | 5,14-16 | H01Q3/24<br>H01Q3/30<br>H01Q21/06<br>H01Q21/08 |
| X | US 2011/025577 A1 (WARD JONATHAN W [US] ET AL) 3 February 2011 (2011-02-03) | 1-4,6-13 | H01Q25/00 |
| Y | * figures 1-3 *<br>* paragraphs [0014], [0015] * | 5,14-16 | |
| Y | US 2003/164791 A1 (SHINODA HIROSHI [JP] ET AL) 4 September 2003 (2003-09-04)<br>* figure 4 *<br>* paragraphs [0018], [0085] * | 5,14-16 | |
| A | US 2011/151779 A1 (BONGFELDT DAVID CHARLES [CA] ET AL) 23 June 2011 (2011-06-23)<br>* abstract; figures 1,2 *<br>* paragraphs [0029] - [0034] * | 1-16 | |
| A | US 6 124 832 A (JEON SOON IK [KR] ET AL) 26 September 2000 (2000-09-26)<br>* abstract; figures 8-11 *<br>* column 6, line 53 - column 7, line 59 * | 1-16 | TECHNICAL FIELDS SEARCHED (IPC)<br><br>H01Q |

The present search report has been drawn up for all claims

| Place of search | Date of completion of the search | Examiner |
|---|---|---|
| Munich | 21 June 2017 | Unterberger, Michael |

EPO FORM 1503 03.82 (P04C01)

**EP 3 340 378 A1**

## ANNEX TO THE EUROPEAN SEARCH REPORT
## ON EUROPEAN PATENT APPLICATION NO.

EP 16 30 6791

21-06-2017

| Patent document cited in search report | Publication date | Patent family member(s) | Publication date |
|---|---|---|---|
| DE 102007056910 A1 | 28-05-2009 | DE 102007056910 A1<br>EP 2215689 A1<br>WO 2009068337 A1 | 28-05-2009<br>11-08-2010<br>04-06-2009 |
| US 2011025577 A1 | 03-02-2011 | NONE | |
| US 2003164791 A1 | 04-09-2003 | US 2003164791 A1<br>US 2004164892 A1 | 04-09-2003<br>26-08-2004 |
| US 2011151779 A1 | 23-06-2011 | GB 2466584 A<br>US 2009140921 A1<br>US 2011151779 A1<br>WO 2009026719 A1 | 30-06-2010<br>04-06-2009<br>23-06-2011<br>05-03-2009 |
| US 6124832 A | 26-09-2000 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 16305611 A

**Non-patent literature cited in the description**

- **BHUIYAN et al.** Advanced Multipath Mitigation Techniques for Satellite-Based Positioning Applications. *International Journal of Navigation and Observation,* vol. 2010

- **NEUENSCHWANDER.** Satellite Tracking from Camera: The Inverse GPS Problem. Swiss Federal Institute of Technology, 2009